# EUROPÄISCHE PATENTSCHRIFT

(11) **EP 0 561 164 B1**
(45) Veröffentlichungstag und Bekanntmachung des Hinweises auf die Patenterteilung: **17.05.1995**
(21) Anmeldenummer: 93102364.2
(22) Anmeldetag: 16.02.1993
(51) Int. Cl.: B23K 11/04, B23K 9/08, B23K 20/02, C07D 235/00

(54) **Verfahren zum Verbinden von Sphärogussteilen mit Stahl oder Stahlguss**
Procedure for joining nodulized cast iron pieces with steel or cast steel
Procédé pour joindre des éléments en fonte nodulaire avec des éléments en acier ou en acier moulé

(30) Priorität: 20.03.1992 DE 4209101
(43) Veröffentlichungstag der Anmeldung: 22.09.1993
(73) Patentinhaber: Fried. Krupp AG Hoesch-Krupp, 45143 Essen (DE); KUKA Schweissanlagen & Roboter GmbH, D-86165 Augsburg (DE)
(72) Erfinder: Knothe, Wolfgang, Dr., W-5840 Schwerte (DE); Mazac, Karel Dr., 86316 Friedberg (DE)

(56) Entgegenhaltungen:
- EP-A- 0 409 990
- GB-A- 2 222 976
- ZIS- MITTEILUNGEN Bd. 28, Nr. 10, August 1986, HALLE, DE Seiten 1134 - 1141 H.WINTERSTEIN ET AL 'Pressschweissen von Gusseisen mit dem MBL- Verfahren'

## Beschreibung

Die Erfindung betrifft ein Verfahren zum Verbinden von Sphärogußteilen mit rohrförmigem Ende mit rohrförmigen Vorschweißteilen aus Stahl oder Stahlguß mittels Preßschweißen mit magnetisch bewegtem Lichtbogen.

Bauteile aus Gußeisen, insbesondere aus Sphäroguß, können nicht ohne weiteres durch übliche Schweißverfahren mit Stahl oder Stahlgußteilen verbunden werden. Die dabei auftretenden Gefügeveränderungen wirken sich so nachteilig auf die Schweißzone aus, daß keine Gewähr für die Funktion des Gesamtteiles mehr gegeben ist. Um zu ermöglichen, auch Gußteile, insbesondere Sphärogußteile, in Schweißkonstruktionen einbinden zu können, wird vorgesehen, daß unter kontrollierten Bedingungen Anschweißteile insbesondere aus schweißbarem Stahl vor das Gußteil geschweißt werden. Häufig ist danach eine Wärmebehandlung dieses gesamten Teils erforderlich. Das verfahren wird bei Konstruktionsteilen für den Fahrzeugbau, aber auch bei Armaturen für Rohrleitungen, die danach auf der Baustelle mit den zu verlegenden Rohrleitungen verschweißt werden, eingesetzt.

Nach der DE-Lit. "Preßschweißen von Gußeisen mit dem MBL-Verfahren; Winterstein, Penning, ZIZ-Mitteilungen, Halle 28 (1986) 10, Seiten 1134 bis 1141" wurden Versuche unternommen, Sphärogußteile mit rohrförmigem Ende mit rohrförmigen Vorschweißteilen aus Stahl mittels Preßschweißen mit magnetisch bewegtem Lichtbogen zu verbinden. Es wird vorgeschlagen, bei optimaler Prozeßführung die Bildung einer flüssigen Phase zu unterdrücken. Weiterhin wird empfohlen, zum Schweißen von Sphärogußteilen ein Vorwärmen vorzusehen.

Als Nachteil wird beschrieben, daß das Gefüge im Schweißstoßbereich nicht nur austenitisiert, sondern im Extremfall zu Martensit mit Härtespitzen bis zu 700 HV aufhärtet. Diese Aufhärtung soll durch eine nachfolgende Wärmebehandlung abgebaut werden. Darüber hinaus können im unmittelbaren Schweißstoßbereich ledeburitische Gefügebestandteile auftreten. Weiterhin nachteilig wurde beobachtet, daß bei der Verbindung von Sphäroguß mit Stahl in der Naht und im unbeeinflußten Grundwerkstoff vorzeitige Anrisse durch Mikrolunker auftreten.

Der Erfindung liegt die Aufgabe zugrunde, ein verfahren nach dem Oberbegriff des Anspruchs 1 zu finden, bei dem ohne eine nachfolgende Wärmebehandlung auch im Bereich der Schweißnaht ein Gefüge eintritt, das eine ausreichende Festigkeit und Dehnung aufweist. Es soll verhindert werden, daß Mikrolunker auftreten, um dieses verfahren für Hochsicherheitsteile einsetzen zu können wie beispielsweise für Sphärogußarmaturen mit Vorschweißrohrenden aus Stahl, die mit unter Druck stehenden Flüssigkeits- oder Gasleitungen an der Baustelle verschweißt werden können.

Diese Aufgabe wird durch ein Verfahren gemäß Anspruch 1 gelöst.

Die mit der Erfindung erzielten Vorteile bestehen insbesondere darin, daß es das erfindungsgemäße Verfahren ermöglicht, Sphärogußteile mit Vorschweißteilen aus Stahl oder Stahlguß durch das wirtschaftliche Verfahren des Preßschweißens mit magnetisch bewegtem Lichtbogen zu verbinden, ohne daß es einer nachfolgenden Wärmebehandlung bedarf. Weiterhin vorteilhaft können größere Wandstärken als bisher miteinander verbunden werden und die Gefahr, daß nur die Kanten der miteinander zu verbindenden Stirnflächen durch eine einwandfreie Schweißverbindung miteinander verbunden sind, ist wesentlich verringert.

Das Verfahren wird nachfolgend anhand eines Beispiels näher beschrieben. Auf einer Preßschweißmaschine wird ein Schiebergehäuse für eine Absperrarmatur aus Sphäroguß mit einem rohrförmigen Ende beispielsweise mit einem Durchmesser von 100 mm und einer Wandstärke von 6 mm und diesem Teil gegenüberliegend ein Stahlrohr mit gleicher Abmessung eingespannt. Ein magnetisch bewegter Lichtbogen rotiert zwischen den zu verbindenden Stirnflächen der eingespannten Teile und wird so geregelt, daß er beide Flächen über den gesamten Querschnitt gleichmäßig erwärmt. Diese Erwärmung erfolgt mit hoher elektrischer Leistung und sehr schnell so lange, bis die Stirnfläche des Sphärogußteils annähernd vollflächig flüssig ist. Durch die schnelle Erwärmung tritt nur ein geringer Wärmefluß in Richtung auf das Werkstück auf, so daß eine Gefügeumwandlung lediglich nahe der Schweißnaht erfolgt.

Sofort nach dem Aufschmelzen der Stirnfläche des Sphärogußteils werden beide Stirnflächen aufeinandergepreßt. Dadurch, daß das Gußmaterial flüssig ist, werden alle eventuellen Unebenheiten oder Vertiefungen auf den zu verbindenden Stirnflächen mit flüssigem Material gefüllt. Das relativ starke Gegeneinanderpressen der zu verbindenden Stirnflächen bewirkt weiterhin, daß gelöster Kohlenstoff, Schlacken und unerwünschte Legierungen weitgehend aus dem Schweißnahtbereich ausgedrückt werden und kein ledeburitisches Gefüge entsteht.

Es hat sich gezeigt, daß bei nach dem beschriebenen Verfahren verbundenen Teilen die Feinkörnigkeit des Stahls mikroskopisch dicht bis an die Schweißnaht erhalten bleibt. In gleicher Weise sind mikroskopisch bis an die Schweißnaht eine ausreichende Anzahl von unverformten Sphäroliten vorhanden. Die übrigen in Lösung gegangenen Sphäroliten führen zu einer Umwandlung des ferritischen Grundmaterials in die Perlitstufe mit ausreichender Festigkeit und Elastizität.

## Patentansprüche

1. Verfahren zum Verbinden von Sphärogußteilen mit rohrförmigem Ende mit rohrförmigen Vorschweißteilen aus Stahl oder Stahlguß mittels preßschweißen mit magnetisch bewegtem Lichtbogen, dadurch gekennzeichnet, daß die zu verbindenden Stirnflächen vor dem Preßvorgang ohne Vorwärmung bis zur Schweißtemperatur erwärmt werden, bis wenigstens eine der Stirnflächen annähernd vollflächig flüssig ist und dann die schmelzflüssigen Werkstoffanteile durch den Preßvorgang aus dem Nahtbereich herausgedrückt werden.

2. Verfahren nach Anspruch 1, dadurch gekennzeichnet, daß die zu verbindende Stirnfläche des Sphärogußteils annähernd vollfächig flüssig ist.

3. Verfahren nach Anspruch 1 oder Anspruch 2, dadurch gekennzeichnet, daß die Wandstärken der zu verschweißenden Teile 3 mm bis 20 mm betragen.

4. Verfahren nach Anspruch 1 oder Anspruch 2, dadurch gekennzeichnet, daß die Wandstärken der zu verschweißenden Teile 4 mm bis 10 mm betragen.

## Claims

1. A procedure for joining spheroidal graphite cast iron pieces having a tubular end with tubular pre-welded parts made of steel or cast steel by means of pressure welding using a magnetically moved arc, characterised in that the end faces to be joined are heated during the pressing process, without preheating, up to the welding temperature until at least almost the entire surface of one of the end faces is fluid and then the molten portions of the material are pressed out of the seam region during the pressing process.

2. A procedure according to claim 1, characterised in that the end face of the spheroidal graphite cast iron part to be joined is fluid over almost its entire surface.

3. A procedure according to claim 1 or claim 2, characterised in that the walls of the parts to be welded are 3 mm to 20 mm thick.

4. A procedure according to claim 1 or claim 2, characterised in that the walls of the parts to be welded are 4 mm to 10 mm thick.

## Revendications

1. Procédé pour relier des pièces en fonte nodulaire à extrémité tubulaire, a des pièces tubulaires à souder en acier ou en acier moulé, au moyen d'un soudage sous pression à arc déplacé magnétiquement, caractérisé en ce que les surfaces frontales à relier sont réchauffées jusqu'à la température de soudage, sans préchauffage, avant le processus de compression, jusqu'à ce qu'au moins une des surfaces frontales soit liquide sur pratiquement toute sa surface, et les parties liquéfiées du matériau sont ensuite repoussées hors de la zone du cordon par le processus de compression.

2. Procédé selon la revendication 1, caractérisé en ce que la surface frontale de liaison de la pièce en fonte nodulaire est liquide sur pratiquement toute sa surface.

3. Procédé selon la revendication 1 ou la revendication 2, caractérisé en ce que l'épaisseur des parois des pièces à souder vaut de 3 mm à 20 mm.

4. Procédé selon la revendication 1 ou la revendication 2, caractérisé en ce que l'épaisseur des parois des pièces à souder vaut de 4 mm à 10 mm.
